# EUROPEAN PATENT APPLICATION

(11) **EP 0 744 866 A2**
(43) Date of publication of application: **27.11.1996**
(21) Application number: 96107164.4
(22) Date of filing: 07.05.1996
(51) Int. Cl.: H04N 7/088

(54) **Subtitling method for a video picture**

(30) Priority: 23.05.1995 FI 952503
(71) Applicant: NOKIA TECHNOLOGY GmbH, 75175 Pforzheim (DE)
(72) Inventor: Saarinen, Pertti, c/o Nokia Technology GmbH, 75175 Pforzheim (DE); Koivisto, Kyösti, c/o Nokia Technology GmbH, 75175 Pforzheim (DE)

(57) **Abstract**

The invention relates to a subtitling method for a video picture. The subtitles are transmitted to a receiver via a teletext channel. The teletext channel signal or another data channel of the transmission includes information about the language(s) of the audio channel and the subtitle languages transmitted via the teletext channel. According to the invention, a receiver is provided with a specification table, and after a specification the subtitle display and language selection are performed automatically according to that table. Advantageously, a user determines on the basis of the specification table the order in which the subtitle display and language selection are carried out automatically after the specification. The specification table is preferably created in the form of a text page.

## Description

The invention relates to a video picture subtitling method according to the preamble of claim 1.

Programs in foreign languages are usually shown with subtitles in connection with a video picture, such as a television picture, for example. Subtitles added to a video signal usually mean that only one subtitle language is used. A program in a foreign language can be subtitled using a teletext channel, but usually the subtitles in that case are in the same language than what is the primary language of the audio channel. When the language of the audio channel of the transmission is the same as that of the teletext channel, the subtitles are intended primarily for viewers with impaired hearing. Some satellite TV channels transmit subtitles in different languages under separate teletext page numbers and the selection is performed in the reception by choosing the desired subtitle page number.

A data signal related to the D2MAC television standard contains tabular information in hexadecimal codes about the transmission languages of the audio channel and the subtitle languages. Furthermore, the transmission signal according to the D2MAC standard facilitates up to four simultaneous monophonic sounds, and in subtitling through the teletext channel there may be dozens of subtitle languages. The audio channels of the NICAM and A2 stereo systems widely used in television transmissions today can both be used to transmit two monophonic transmissions in different languages. These audio channel arrangements can be applied to signals according to the PAL, PALplus and SECAM standards. For the new digital DVB television signal, the identification codes of the audio channel transmission languages and the list of subtitle languages can be added in the data channel or preferably in the text channel because in a conversion by a transcoder (say, to a PAL signal) the information remains unchanged. At the same time, receivers are compatible as far as signal processing is concerned using simpler decoding circuits.

The PALplus and D2MAC standards allow a wide screen television transmission format with an aspect ratio of 16:9 (width-to-height ratio). A received picture in a normal TV set screen with an aspect ratio of 4:3 is then vertically short, leaving a black area at the top and bottom edges of the picture. Then the preferred position for subtitles added in the picture is the base of the picture, where they do not obscure the wide screen picture. If the subtitles are added to a video signal as described above, they will not be displayed on a 16:9 screen since the zoomed wide screen picture covers the whole area of the wide screen. The best way to bring back the subtitles on the screen is to transmit them parallel via a teletext channel.

A problem with current TV picture, or video picture in general, subtitling systems based on teletext is that the text selection, if it is possible, has to be performed at the receiver every time viewing of a program is commenced. Another problem is that current subtitling systems are not optimally suited for wide screen transmission formats, such as video signal transmission systems according to the PALplus or D2MAC standards, because subtitles added in the active area of the video needlessly obscure the picture.

An object of the invention is to provide a subtitling method for a video picture avoiding the disadvantages mentioned above. Another object of the invention is to introduce a new video picture subtitling method which has versatile selection options and which can be used in particular to complement subtitling methods related to video signal transmission systems according to the PALplus and D2MAC standards in order to meet the needs of a multi-language program supply especially via satellites and cable systems.

The method according to the invention is characterized by what is expressed in the characterizing part of claim 1.

In the video picture subtitling method according to the invention, subtitles are transmitted parallel to a receiver via a teletext channel, and the signal of the teletext channel includes information about the language(s) of the audio channel and about the subtitle languages transmitted via the teletext channel. According to the invention, a receiver is provided with a specification table, and after a specification the subtitle display and language selection are performed automatically according to that table.

In a preferred embodiment of the invention the specification table constitutes a text page. Advantageously, it is defined in a uniform manner in all teletext channel signals. Then there is the advantage that the specification table and further on the basis of the specification table the information about the use of subtitles and the language of the subtitles are found quickly and automatically in the receiver. Reception by equipment without these automatic features can also benefit from the subtitle and language list (= specification table).

In another preferred embodiment of the invention, the specification table is defined in the signal by a predetermined page number.

In another embodiment according to the invention the specification table is included in the signal and an identifier code is added to it so that it will be immediately identified upon reception. This has the advantage that with the identifier code the specification table can be found from among different subtitle pages if e.g. a predetermined page number has not been used in the signal for the specification table. A receiver is provided with a suitable search algorithm to find the specification table in the text channel signal. The search algorithm is adapted to the control processor software, and e.g. the WSS signal according to the PALplus standard can indicate the existence of the text page containing the specification table with one bit and start, when necessary, the search algorithm directly when required by the signal. The same information (as in the WSS) is also defined in new digital standards. (The WSS bits [2] define, among other things, the picture format and location, e.g. 16:9 picture format and the picture in the upper part in a 4:3 screen.)

In a preferred embodiment of the invention, the specification table is identified upon reception on the basis of the information in it. This has the advantage that in order to find and use the specification table, no information is required about the text page on which the specification table is located.

In a preferred embodiment of the invention, the specification table includes the audio channel and subtitle language transmission data, their identifier codes (= language codes) and plain-language information, such as information about additional subtitle pages read into the specification table from the data file included in the teletext channel signal. Now, the receiver has a suitable algorithm to identify the structure of the signal, whereby it can find out information related to the audio channel and subtitles and thus automatically generate a specification table for a person viewing the program of a particular channel.

Advantages of the video picture subtitling method according to the invention are as follows. Subtitles are included automatically in the desired language or in the language that has the next-highest priority, as defined by permanent default settings of the TV receiver. If required, the subtitles are always automatically included in the language of the audio channel, which is especially advantageous to viewers with impaired hearing. The subtitles can be left out automatically when the viewer's language specification in the specification table does not require subtitles. Subtitles can also be selected directly by bypassing the automatic feature in subtitle selection. Recordings with video cassette recorders are automatically provided with the best possible subtitles; in other words, the subtitles according to the same selection algorithm as with the TV operation are added to the video signal recorded. The subtitling method also enables automatic language selection for the audio channel. The video picture subtitling method according to the invention can adaptively complement subtitling methods according to, say, the PALplus and D2MAC standards to meet the requirements of multi-language program supply especially via satellites and cable systems.

The subtitling method can also be applied to the viewing of video recordings, wherein the subtitles are in data format (e.g. according to system [6]).

The invention is described with reference to the accompanying drawings, where
- Fig. 1: shows a text page containing a specification table;
- Fig. 2: shows an example of a specification table displayed on a TV screen;
- Fig. 3: shows in block diagram format a video picture subtitling method adapted to a receiver;
- Fig. 4: is an illustration of a subtitle selection algorithm related to the subtitling method, wherein Fig. 4a illustrates the saving of a priority list drawn up by the user, Fig. 4b the beginning of the selection algorithm, Fig. 4c the continuation of the selection algorithm and Fig. 4d the end of the selection algorithm.

Let a TV transmission signal contain information about the transmission language of the audio channel and the subtitle languages. The TV transmission can comply with the D2MAC standard, for example. Then, the language definition described in the data contents of the D2MAC standard is added to the TV transmission signal combined with the hide-attributes described in the teletext standard and, correspondingly, the text area is transmitted visible.

In a receiver, the language definitions are extracted from the TV transmission signal according to the D2MAC standard after the following successive extraction steps: (1) the video signal proper (luminance and chrominance signals) and the data signal are extracted from the TV transmission signal in a demultiplexer; (2) the data signal is fed to a data signal extracting device which outputs audio data (digital audio signal) and other data signals; (3) the so-called service data signal and other data signals are extracted from the other data signals and (4) the language data, i.e. the language definitions, are extracted from the service data signal. The language data is extracted from transmission signals according to other TV standards in a corresponding fashion.

The specification table is adapted to the primary teletext page the contents of which are described below. It is defined on the basis of the language data, i.e. the language definitions according to the TV standard in question. The specification table includes a header row which displays the program channel information, for example. The subtitle language options are included in the specification table and a primary language is specified for the subtitles which usually is the "home" language of the transmission. The subtitles are displayed on two text rows or in a special case on one or three text rows. The hidden text in the specification table can be viewed by pushing a special REVEAL button. The hidden text contains the following information:
- home language (H) of the transmission in plain language;
- current language A of the audio channels and an alternative language B (if used) in plain language (one specification per row), wherein language A usually is the home language of the transmission;
- name of the spatial sound system S used, e.g. D = Dolby (TM);
- subtitle page numbers 333, 334, 335, which there may be more than the primary page, followed by the name of the page in plain language (one specification per row).

The specification table further includes information which remains "invisible" in all situations, namely, a hexadecimal or corresponding language code for the languages available. The language code can be a hidden text at the beginning or the end of a row. The language code is separated so that it can be read by a receiver processor and so that the audio channel language codes related to sound and page-specific teletext language codes can be extracted e.g. on the basis of a page number or some other sign included in them. The language code is repeated three times, for example, so that improved interference protection can be implemented for the automatic language selection functions in the reception. The page number or other characteristic of the teletext page in question can also be repeated in front of the language code. To ensure that the subtitling mode selection is sustained, it is possible to monitor the contents of consecutive teletext transmission packets, thus creating additional security. Alternatively, a known error correction code can be used in the transmission. Then the error correction code must not conflict with the standard text and control character identification performed in the teletext decoder.

In connection with the specification table it is also possible to send identification data e.g. on a row of its own. The identification data then includes information about the primary teletext page (page number) and an identification code. This makes it possible to fetch the primary teletext page when the page number is different from the standard. At the same time the identification code ensures that the contents of the selected page are correct.

In connection with the specification table it is also possible to send the name of the font used in the subtitles and the possible font code to which the receiving end can react.

A TV receiver or a corresponding signal processing device includes a memory register into which the special information of the primary teletext page obtained via the teletext channel is stored. A TV receiver further includes a preprogrammed specification table stored in memory. The table includes the viewer's subtitle language choices. The specification table may also be combined to the language selection arrangement in the menu control of the user interface of a TV set or a video cassette recorder. The user interface is used to control and adjust the TV set (or the video recorder); e.g. to change channels, adjust sound volume, choose a teletext page number etc. A menu language desired by the user is selected from a menu for the screen displays of the user interface. Marking in the specification table is implemented through cursor control, for example.

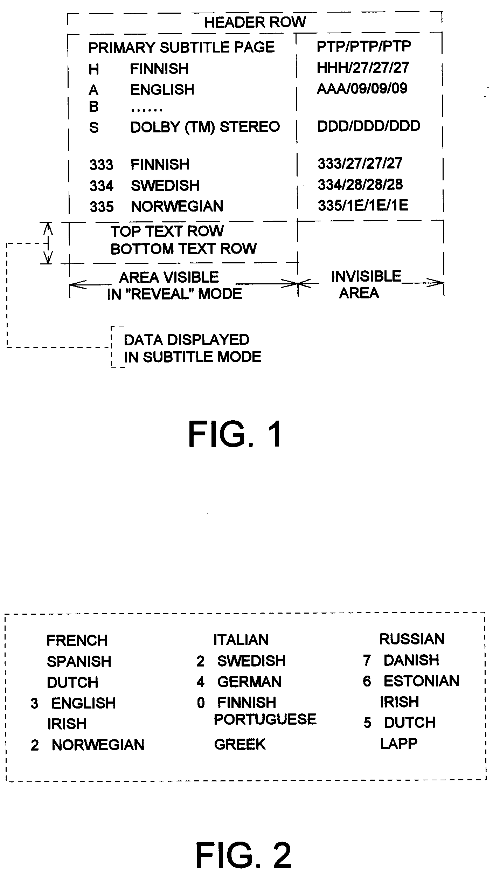

The specification table contains e.g. the following marking codes for audio channel control and teletext channel control. The primary language is marked with codes 1', 2', 3' etc., up to 7', for example. A low code number has higher priority than a high code number. Two identical code marks in the specification table mean the same priority, in which case the language that appears first on the list is selected. A language that does not require subtitles is marked with code 0'. When this is replaced by code 1', permanent subtitles are available through the teletext channel for the home language. If there are several codes 0', the language code corresponding to the menu choice for the screen displays of the receiver's user interface has the priority, otherwise the next one on the list that has code 0' is selected. Otherwise, code "empty" requires subtitles ("empty" can be implemented with push button 9, for example). The factory default of the receiver can be code "empty" for all, i.e. the table in Fig. 2 contains only code marks "empty", but the menu language choice for the screen display user interface sets the code of that language to 0'. This is one example of how to implement the basic rules for the automatic selection of language.

The basic automatic selection ceases to function when a selection is made in the specification table. Correspondingly, the basic automatic selection is restored when the character sequence corresponding to the basic automatic function is returned with a suitable menu choice, for example. A receiver which does not have a programmed selection table can interpret that a text display mode is required when the codes of the home language H and the current language A are different. Code 8' can be used for special purposes, such as automatic use of the Audetel system [5]. Automatic selection can be overridden with manual selection. This selection can be valid for the duration of the viewing, for example. Audio channel language selection can be carried out automatically with the same criteria.

Fig. 1 shows an example of a teletext specification table and especially of a primary subtitle page. Similarly, Fig. 2 shows an example of a specification table for a TV receiver.

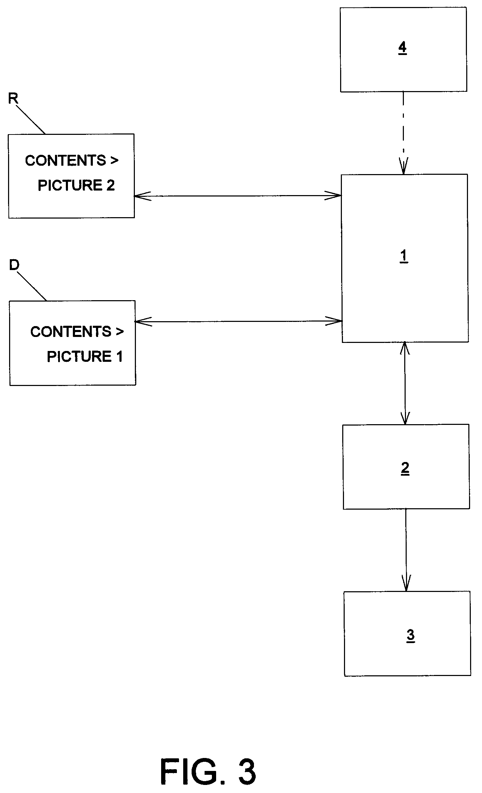

Fig. 3 shows an embodiment with means arranged in connection with a TV receiver for implementing the video picture subtitling method according to the invention. The means for implementing the subtitling method include a control processor 1, a first memory register R and a second memory register D. In addition, the arrangement includes a teletext decoder 2, display controller 3 and a remote controller 4 to control the control processor 1. A non-volatile memory register R, such as an EEPROM memory unit, is created in connection with the preprogramming of the TV receiver by means of the control processor so that the contents of the register correspond to the attributes in Fig. 2, for example. Fig. 2 shows three groups of six languages per group, and these languages can be chosen as subtitle languages. In addition, there are language codes from zero to seven (plus "empty") in front of the languages for language selection by means of the codes. When the TV receiver is in operation, the control processor 1 controls the teletext decoder 2 and uses the various identifiers (such as the page number and text page identification code "PTP") to search for the specification table of that particular program channel, like the primary subtitle page (Fig. 1) and stores its identifiers into a second memory register D. The primary subtitle page corresponds in this case to the attributes in Fig. 1. The tables corresponding to Figs. 1 and 2 are compared by means of a process in the control processor 1 and a subtitle display is created on the receiver's screen by means of the teletext coder 2 and display controller 3. Subtitle selection programming can be performed always when required by means of the remote controller 4. The programmed subtitle selection can be overridden during operation.

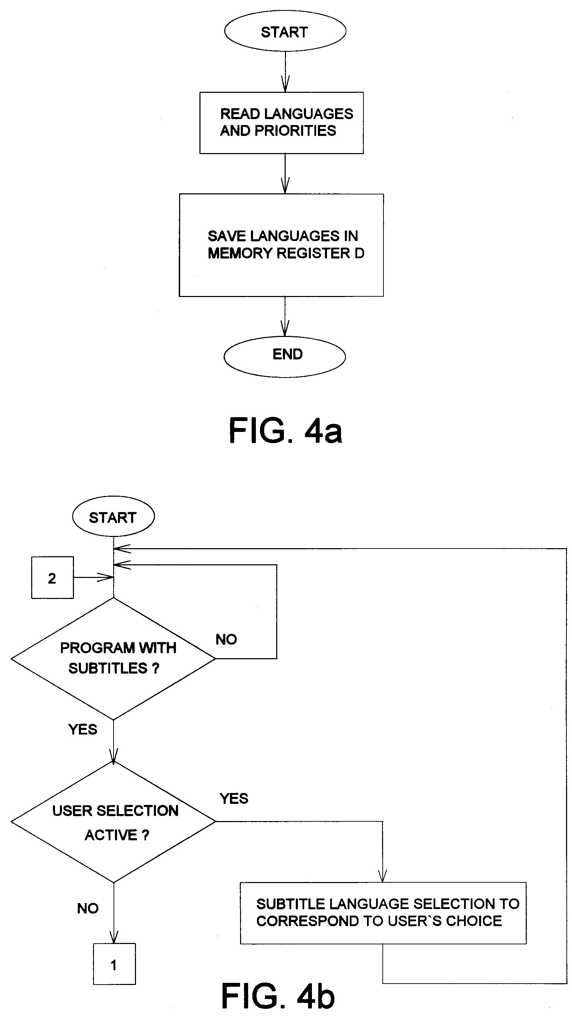

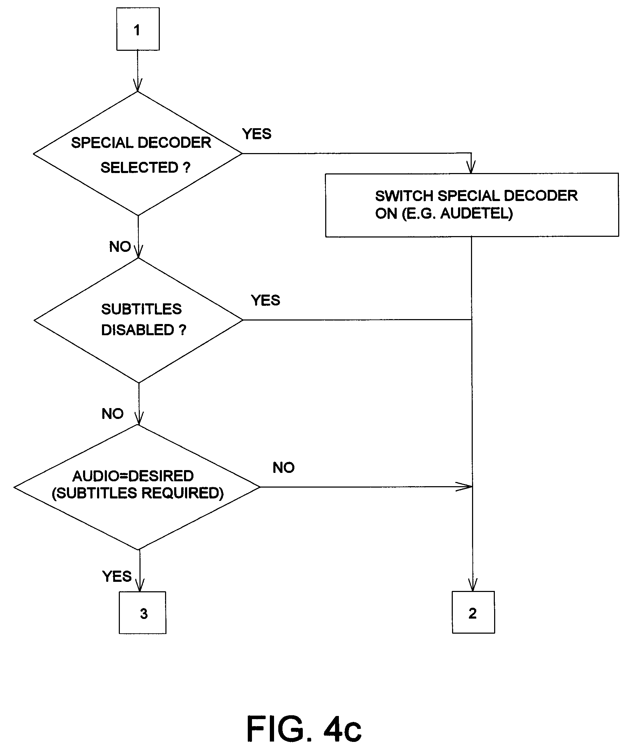

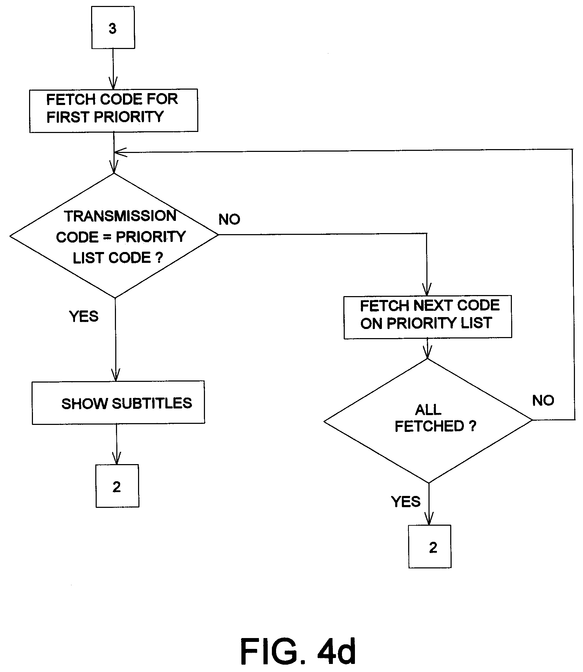

The block diagrams in Figs. 4a to 4d illustrate the operation of the control processor 1 to realize the subtitle language selection. Fig. 4a shows the saving of the language priority list defined by the user. First, the languages and their priorities are read into the memory of the processor 1 and stored in memory register D. Figs. 4b to 4d show the selection algorithm, or how the user selects the desired subtitles to appear on the screen on a certain program channel. At the beginning in Fig. 4b it is checked whether subtitles are included in the TV program signal. If they are, the user can actively select the subtitle language. If the user does not use this option, the process moves on to the diagram shown in Fig. 4c. If the TV set contains a special decoder, such as Audetel [5], the special decoder selection is checked next. If that is not active, it is checked whether subtitles are disabled with code 0'. If subtitles are not disabled, it is checked whether audio is desired. If subtitles are required, the process moves on to the block diagram shown in Fig. 4d. The priority code of the first language is fetched. Then it is checked whether the transmission code is identical with the priority list code. If so, subtitles are displayed. If the transmission code is not identical to the priority list code, the next code is fetched from the priority list. And so on, until all priority list codes have been fetched and checked. Subtitles are then displayed.

Above, the invention was described mainly with reference to one preferred embodiment, but it is obvious that the invention can be modified in many ways within the scope of the inventive idea defined by the claims set forth below.

The standards mentioned above are:
- [1] PALplus;: PALplus system description, revision 2.0, June 1993.
- [2] PALplus: WSS data; ETSDI draft prETS 300294, November 1993.
- [3] D2MAC;: Specification of the systems of the MAC/packet family EBU Tech. 3258-E, October 1986.
- [4] Teletext;: Teletext specification, EBU interim technical document SPB 493, Geneva December 1992.
- [5]: Audetel project Newsletter, September 1993, Published by the Royal National Institute for the Blind, 224 Great Portland Street, London WIN6AA.
- [6]: Recordable Data Format for VHS in the Vertical Blanking Interval. EACEM/TR internal paper March 4th 1994.

## Claims

1. A subtitling method for a video picture, wherein subtitles are transmitted parallel to a receiver via a teletext channel and wherein information about the audio channel language(s) and the subtitle languages transmitted via the teletext channel is included in the teletext channel signal or in another data channel of the transmission, **characterized** in that a specification table is generated in the receiver and after a specification, the subtitles are displayed and the subtitle language is selected automatically on the basis of said table.

2. The video picture subtitling method of claim 1, **characterized** in that the user specifies on the basis of the specification table the order in which the subtitle display and subtitle language selection are automatically performed after the specification.

3. The video picture subtitling method of claim 1 or 2, **characterized** in that the specification table is generated in the form of a text page.

4. The video picture subtitling method of claim 1, 2 or 3, **characterized** in that the specification table is generated in the form of a text page which is uniformly defined in all text channel signals.

5. The video picture subtitling method of claim 4, **characterized** in that the specification table is defined in the signal by a predetermined page number.

6. The video picture subtitling method of any one of the preceding claims, **characterized** in that the specification table is included in a signal and an identification code is added to it so that it can be immediately identified in the teletext channel signal.

7. The video picture subtitling method of any one of claims 1 to 5, **characterized** in that the specification table is included in a signal and it is identified upon reception by means of attributes included in it.

8. The video picture subtitling method of any one of claims 1 to 5, **characterized** in that the specification table includes audio channel and subtitle language transmission data, language identification codes and plain-language information, such as information about additional subtitle pages and language codes, which are read into the specification table from a data file included in the transmitted signal.
